# FASCICULE DE BREVET EUROPEEN

(11) **EP 2 195 207 B1**
(45) Date de publication et mention de la délivrance du brevet: **27.02.2013**
(21) Numéro de dépôt: 08840507.1
(22) Date de dépôt: 29.09.2008
(51) Int. Cl.: B60R 21/34, B62D 21/15, B62D 25/16

(54) **STRUCTURE DE FIXATION D'UNE AILE AVANT DE VEHICULE AUTOMOBILE**
STRUKTUR ZUR SICHERUNG DES VORDEREN STOSSFÄNGERS EINES MOTORFAHRZEUGS
STRUCTURE FOR SECURING THE FRONT FENDER OF A MOTOR VEHICLE

(30) Priorité: 12.10.2007 FR 0707170
(43) Date de publication de la demande: 16.06.2010
(73) Titulaire: Renault S.A.S., 92100 Boulogne-Billancourt (FR)
(72) Inventeur: DEGAUGUE, REMI, F-78310 Maurepas (FR); PANCRACE, PASCAL, F-78210 Saint Cyr L'ecole (FR)
(86) Numéro de dépôt international: PCT/FR2008/051741
(87) Numéro de publication internationale: WO 2009/050397

(56) Documents cités:
- WO-A-2005/023606
- DE-A1- 10 102 187
- DE-A1- 10 233 474
- FR-A- 2 898 102
- JP-A- 2000 177 647

## Description

La présente invention concerne une structure de fixation d'une aile avant de véhicule automobile à des éléments rigides de la carrosserie de ce véhicule.

Ces éléments rigides peuvent être constitués par la traverse qui s'étend à l'arrière du compartiment moteur près du pare-brise et par une plaque en tôle fixée à une extrémité de la traverse ci-dessus et s'étendant vers le bas sensiblement perpendiculairement à la traverse.

Cette plaque peut être la doublure de la partie de la carrosserie appelée pied avant.

Les normes de sécurité actuelles concernant les chocs « piéton » imposent que la structure de l'avant des véhicules doit être conçue de telle sorte qu'en cas de choc contre un piéton à faible vitesse du véhicule, ce piéton ne doit pas subir de blessure grave.

Le bouclier avant ainsi que les ailes avant sont principalement concernées par les normes ci-dessus.

Le document DE 102 33 474 A1 2004.02.26 décrit un système de fixation d'une aile de véhicule automobile, en forme de U, au moyen d'une structure creuse, sensiblement en forme d'ogive en arc brisé, permettant une définition exacte de la ligne de joint entre l'aile et le capot avant du véhicule. Cette structure creuse, complexe, introduit une résistance propre de l'ensemble, inhérent à cette structure, notamment en cas de choc piéton.

La présente invention concerne plus précisément la fixation de l'aile avant à des éléments rigides de la carrosserie du véhicule.

Le but de la présente invention est de créer une structure de fixation d'une aile avant de véhicule automobile qui non seulement respecte la norme des chocs « piéton » mais présente également d'autres fonctions.

L'invention concerne ainsi une structure de fixation d'une aile avant de véhicule automobile à des éléments rigides de la carrosserie de ce véhicule, ces éléments comprenant une traverse s'étendant à l'arrière du compartiment moteur près du pare-brise et une plaque en tôle fixée à une extrémité de cette traverse et s'étendant vers l'avant et vers le bas sensiblement perpendiculairement à cette traverse, le bord supérieur de cette plaque s'étendant sensiblement parallèlement au bord supérieur de l'aile avant.

Suivant l'invention, cette structure de fixation est caractérisée selon la revendication 1.

Ainsi, l'aile du véhicule au lieu d'être reliée directement à des parties rigides est reliée à ceux-ci par un élément en tôle relativement mince qui peut se plier en cas de choc à l'avant de l'aile, de sorte que celle-ci peut reculer et absorber ainsi l'énergie du choc.

De plus, l'élément en tôle ci-dessus ferme l'espace compris entre la bordure supérieure de l'aile et le bord supérieur de la plaque en tôle, en constituant ainsi un cloisonnement entre le passage de roue et le compartiment moteur présentant une fonction acoustique et évitant le passage des odeurs.

De préférence, la bordure de l'aile recouvre partiellement l'élément en tôle.

Cette disposition optimise les fonctions précitées du cloisonnement.

Selon une version préférée de l'invention, l'élément en tôle a une section transversale en forme d'équerre dont une partie sensiblement verticale est fixée contre la face interne de la bordure et une autre partie sensiblement horizontale est fixée contre le bord supérieur de ladite plaque.

La fixation peut être assurée au moyen de vis ou par des points de soudure lorsque l'aile est en tôle, ou par des vis lorsque l'aile est en matière plastique.

De préférence également, le bord supérieur de ladite plaque comporte un rebord plié à angle droit sur lequel est fixée la partie sensiblement horizontale de l'élément en tôle.

Cette partie sensiblement horizontale de l'élément en tôle est de préférence dirigée vers l'intérieur du compartiment moteur.

Selon une particularité particulièrement avantageuse de l'invention, l'extrémité libre de la partie sensiblement horizontale de l'élément en tôle est recourbée vers le haut pour former une gouttière.

D'autres particularités et avantages de l'invention apparaîtront encore tout au long de la description ci-après.

L'invention est maintenant décrite en référence aux dessins annexés, non limitatifs, dans lesquels :
- la figure 1 est une vue en perspective d'une structure de fixation d'une aile avant de véhicule, selon l'invention,
- la figure 2 est une vue en coupe transversale schématique de la structure,

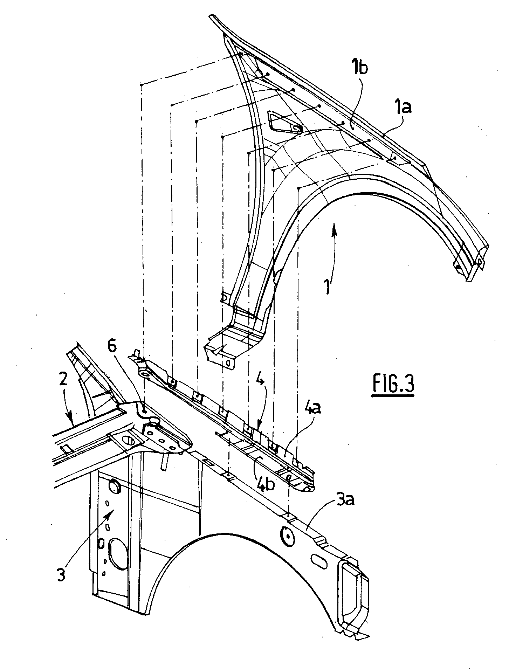

- la figure 3 est une vue en perspective éclatée de la structure.

Les figures annexées représentent la structure de fixation d'une aile avant 1 de véhicule automobile à des éléments rigides de la carrosserie de ce véhicule.

Ces éléments comprennent une traverse 2 s'étendant à l'arrière du compartiment moteur près du pare-brise et une plaque en tôle 3 fixée à une extrémité de cette traverse 2 et s'étendant vers le bas et vers l'avant sensiblement perpendiculairement à cette traverse 2.

Le bord supérieur 3a de cette plaque 3 s'étend sensiblement parallèlement au bord supérieur la de l'aile avant 1.

Cette plaque 3 est dans l'exemple représenté sur la doublure du pied droit.

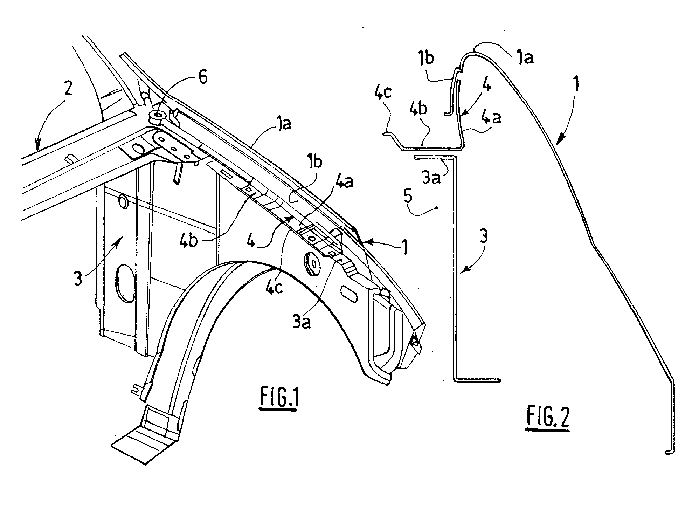

Elle est fixée rigidement à l'extrémité de la traverse 2 en un point 6 (voir figure 1).

Conformément à l'invention, le bord supérieur la de l'aile 1 est prolongé vers le bas par une bordure 1b de sorte que la partie supérieure de l'aile présente une section transversale sensiblement en U (voir figure 2).

Cette bordure 1b est espacée du bord supérieur 3a de la plaque 3 et l'espace ainsi défini est fermé par un élément 4 en tôle fixé à la bordure 1b et au bord supérieur 3a de la plaque 3.

L'épaisseur de cet élément 4 est suffisamment grande pour tenir l'aile et suffisamment faible pour que la tôle de cet élément 4 puisse se déformer lorsqu'un choc du type « choc piéton » est appliqué sur l'avant du véhicule.

La tôle en acier de l'élément 4 peut avoir par exemple une épaisseur égale à 0,65 mm.

Comme on le voit sur la figure 2, la bordure 1b de l'aile 1 recouvre partiellement l'élément en tôle 4.

Dans l'exemple représenté, l'élément en tôle 4 a une section transversale en forme d'équerre dont une partie 4a sensiblement verticale est fixée contre la face interne de la bordure 1b de l'aile et une autre partie 4b sensiblement horizontale est fixée contre le bord supérieur 3a de la plaque 3.

Par ailleurs, le bord supérieur 3a de la plaque 3 comporte un rebord plié à angle droit sur lequel est fixée la partie sensiblement horizontale 4b de l'élément en tôle 4.

De plus, la partie sensiblement horizontale 4b de l'élément en tôle 4 est dirigée vers l'intérieur du compartiment moteur 5.

Comme montré notamment par la figure 2, l'extrémité libre 4c de la partie sensiblement horizontale 4b de l'élément en tôle 4 est recourbée vers le haut pour former une gouttière.

Lors d'un choc du type « piéton » est exercé sur l'avant de l'aile 1, celle-ci recule vers l'arrière et déforme l'élément en tôle 4.

Cette déformation absorbe l'énergie du choc en évitant ainsi une blessure grave du piéton.

Par ailleurs, l'élément en tôle 4 du fait de sa forme et son montage réalise un cloisonnement sensiblement étanche entre le passage de roue 7 (voir figure 2) et le compartiment moteur 5.

De plus, ce cloisonnement évite tout passage de mauvaise odeur et réduit l'émission du bruit du moteur vers l'extérieur.

Les fixations entre l'élément en tôle 4, la plaque 3 et l'aile 1 peuvent être réalisées par des points de soudure, ou des vis ou autre (rivets, etc...) lorsque l'aile 1 est en tôle d'acier.

En revanche, lorsque l'aile 1 est en matière plastique les fixations sont réalisées au moyen de vis, ou autre (rivets, etc...).

## Revendications

1. Structure comprenant une aile avant (1) de véhicule automobile, un élément en tôle (4) et des éléments rigides de la carrosserie de ce véhicule, éléments rigides auxquels l'aile avant (1) est fixée, ces éléments comprenant une traverse (2) s'étendant à l'arrière du compartiment moteur près du pare-brise et une plaque en tôle (3) fixée à une extrémité de cette traverse (2) et s'étendant vers l'avant et vers le bas sensiblement perpendiculairement à cette traverse (2), le bord supérieur (3a) de cette plaque (3) s'étendant sensiblement parallèlement au bord supérieur (1a) de l'aile avant (1), le bord supérieur (1a) de l'aile (1) étant prolongé vers le bas par une bordure (1b) de sorte que la partie supérieure de l'aile présente une section transversale sensiblement en U, cette bordure (1 b) étant espacée du bord supérieur (3a) de ladite plaque (3) et l'espace ainsi défini étant fermé par l'élément en tôle (4) fixé à ladite bordure (1 b) et audit bord supérieur (3a) de la plaque (3), la bordure (1b) de l'aile (1) recouvrant partiellement l'élément en tôle (4), structure **caractérisée en ce que** l'élément en tôle (4) présente une section transversale en forme d'équerre dont une partie (4a) sensiblement verticale est fixée contre la face interne de la bordure (1 b) et une autre partie (4b) sensiblement horizontale est fixée contre le bord supérieur (3a) de ladite plaque (3), l'épaisseur de cet élément (4) étant suffisamment grande pour tenir l'aile et suffisamment faible pour que la tôle de cet élément (4) puisse se déformer lorsqu'un choc du type « choc piéton » est appliqué sur l'avant du véhicule.

2. Structure selon la revendication 1, **caractérisée en ce que** le bord supérieur (3a) de ladite plaque (3) comporte un rebord plié à angle droit sur lequel est fixée la partie sensiblement horizontale (4b) de l'élément en tôle (4).

3. Structure selon l'une des revendications 1 ou 2, **caractérisée en ce que** la partie sensiblement horizontale (4b) de l'élément en tôle (4) est dirigée vers l'intérieur du compartiment moteur (5).

4. Structure selon l'une des revendications 1 à 3, **caractérisée en ce que** l'extrémité libre (4c) de la partie sensiblement horizontale (4b) de l'élément en tôle (4) est recourbée vers le haut pour former une gouttière.

5. Structure selon l'une des revendications 1 à 4, **caractérisée en ce que** ladite plaque (4) est la doublure du pied avant.

## Claims

1. Structure comprising a motor vehicle front wing (1), a sheet metal element (4) and rigid elements of the bodywork of this vehicle, to which rigid elements the front wing (1) is secured, these elements comprising a cross member (2) extending across the rear of the engine compartment near the windscreen and a sheet metal panel (3) secured to one end of this cross member (2) and extending forwards and downwards substantially at right angles to this cross member (2), the upper edge (3a) of this panel (3) running substantially parallel to the upper edge (1a) of the front wing (1), the upper edge (1a) of the wing (1) being extended downwards by an edging (1b) such that the upper part of the wing has a substantially U-shaped cross section, this edging (1b) being spaced away from the upper edge (3a) of the said panel (3) and the space thus defined being closed by the sheet metal element (4) secured to the said edging (1b) and to the said upper edge (3a) of the panel (3), the edging (1b) of the wing (1) partially covering the sheet metal element (4), the structure being **characterized in that** the sheet metal element (4) has a cross section in the shape of a right-angle bracket, a substantially vertical part (4a) of which is secured against the internal face of the edging (1b) and a substantially horizontal other part (4b) of which is secured against the upper edge (3a) of the said panel (3), the thickness of this element (4) being great enough to hold the wing and small enough that the sheet metal of this element (4) can deform when an impact of the "pedestrian impact" type is applied to the front of the vehicle.

2. Structure according to Claim 1, **characterized in that** the upper edge (3a) of the said panel (3) has an edge bent over at right angles and to which the substantially horizontal part (4b) of the sheet metal element (4) is secured.

3. Structure according to either of Claims 1 and 2, **characterized in that** the substantially horizontal part (4b) of the sheet metal element (4) is directed towards the inside of the engine compartment (5).

4. Structure according to one of Claims 1 to 3, **characterized in that** the free end (4c) of the substantially horizontal part (4b) of the sheet metal element (4) is bent over upwards to form a gutter.

5. Structure according to one of Claims 1 to 4, **characterized in that** the said panel (4) is the front hinge pillar lining.

## Patentansprüche

1. Struktur, die einen vorderen Motorfahrzeugflügel (1), ein Blechelement (4) und starre Elemente der Karosserie des Fahrzeugs aufweist, starre Elemente, an welchen der vordere Motorfahrzeugflügel (1) befestigt ist, wobei diese Elemente einen Querträger (2) aufweisen, der sich an der Rückseite des Motorraums in der Nähe der Windschutzscheibe erstreckt, und eine Blechplatte (3), die an einem Ende dieses Querträgers (2) befestigt ist und sich nach vorn und unten im Wesentlichen im rechten Winkel zu diesem Querträger (2) erstreckt, wobei sich der obere Rand (3a) dieser Platte (3) im Wesentlichen parallel zu dem oberen Rand (1a) des vorderen Flügels (1) erstreckt, wobei der obere Rand (1a) des Flügels (1) nach unten durch eine Einfassung (1b) derart verlängert ist, dass der obere Teil des Flügels einen im Wesentlichen U-förmigen Querschnitt aufweist, wobei diese Einfassung (1b) von dem oberen Rand (3a) der Platte (3) beabstandet ist und der dadurch definierte Raum durch das Blechelement (4), das an der Einfassung (1b) und an dem oberen Rand (3a) der Platte (3) befestigt ist, verschlossen ist, wobei die Einfassung (1b) des Flügels (1) das Blechelement (4) teilweise abdeckt, wobei die Struktur **dadurch gekennzeichnet ist, dass** das Blechelement (4) einen Querschnitt in Winkelform aufweist, von dem ein im Wesentlichen senkrechter Teil (4a) gegen die Innenseite der Einfassung (1b) befestigt ist und ein anderer im Wesentlichen horizontaler Teil (4b) gegen den oberen Rand (3a) der Platte (3) befestigt ist, wobei die Stärke dieses Elements (4) ausreichend groß ist, um den Flügel zu halten, und ausreichend schwach, so dass sich das Blech dieses Elements (4) verformen kann, wenn ein Aufprall des Typs "Fußgängeraufprall" an der Vorderseite des Fahrzeugs angelegt wird.

2. Struktur nach Anspruch 1, **dadurch gekennzeichnet, dass** der obere Rand (3a) der Platte (3) eine Krempe, die mit einem rechten Winkel gefaltet ist, aufweist, auf der der im Wesentlichen horizontale Teil (4b) des Blechelements (4) befestigt ist.

3. Struktur nach einem der Ansprüche 1 oder 2, **dadurch gekennzeichnet, dass** der im Wesentlichen horizontale Teil (4b) des Blechelements (4) zu dem Inneren des Motorraums (5) gerichtet ist.

4. Struktur nach einem der Ansprüche 1 bis 3, **dadurch gekennzeichnet, dass** das freie Ende (4c) des im Wesentlichen horizontalen Teils (4b) des Blechelements (4) nach oben gebogen ist, um eine Ablaufrinne zu bilden.

5. Struktur nach einem der Ansprüche 1 bis 4, **dadurch gekennzeichnet, dass** die Platte (4) das Futter des vorderen Fußes ist.
